# EUROPÄISCHE PATENTSCHRIFT

(11) **EP 1 761 988 B1**
(45) Veröffentlichungstag und Bekanntmachung des Hinweises auf die Patenterteilung: **25.04.2012**
(21) Anmeldenummer: 05735000.1
(22) Anmeldetag: 24.03.2005
(51) Int. Cl.: H02J 7/00, H02M 3/335

(54) **VORRICHTUNG UND VERFAHREN ZUM LADUNGSAUSGLEICH VON IN REIHE GESCHALTETEN ENERGIESPEICHERN**
DEVICE AND METHOD FOR EQUALIZING CHARGES OF SERIES-CONNECTED ENERGY STORES
DISPOSITIF ET PROCEDE D'EGALISATION DE LA CHARGE D'ACCUMULATEURS D'ENERGIE COMMUTES EN SERIE

(30) Priorität: 28.06.2004 DE 102004031216
(43) Veröffentlichungstag der Anmeldung: 14.03.2007
(73) Patentinhaber: Continental Automotive GmbH, 30165 Hannover (DE)
(72) Erfinder: BOLZ, Stephan, 93102 Pfatter (DE); GÖTZENBERGER, Martin, 85051 Ingolstadt (DE); KNORR, Rainer, 93055 Regensburg (DE); LUGERT, Günter, 80804 München (DE)
(86) Internationale Anmeldenummer: PCT/EP2005/003164
(87) Internationale Veröffentlichungsnummer: WO 2006/000263

(56) Entgegenhaltungen:
- EP-A- 0 797 290
- DE-B3- 10 256 704
- US-A- 5 659 237
- US-A- 6 069 811
- US-B1- 6 373 226

## Beschreibung

Die Erfindung betrifft eine Vorrichtung und ein Verfahren zum Ladungsausgleich von in Reihe geschalteten Energiespeichern, insbesondere von in Reihe geschalteten Kondensatoren (Zellen) eines Doppelschichtkondensators, wie sie beispielsweise bei einem Kraftfahrzeug-Bordnetz Verwendung finden.

Doppelschichtkondensatoren haben sich als sinnvollste technische Lösung zur Speicherung und Bereitstellung kurzfristig hoher Leistungen in einem Kraftfahrzeug-Bordnetz erwiesen, beispielsweise bei der Beschleunigungsunterstützung (Boosten) der Brennkraftmaschine durch einen als Elektromotor arbeitenden integrierten Starter-Generator oder bei der Umwandlung von Bewegungsenergie in elektrische Energie durch den als Generator arbeitenden integrierten Starter-Generator beim regenerativen Bremsvorgang (Rekuperation).

Die maximale Spannung einer Einzelzelle eines Doppelschichtkondensators ist auf etwa 2,5V bis 3,0V begrenzt, so dass für eine Spannung von beispielsweise 60V - ein typischer Spannungswert für einen in einem 42V-Bordnetz verwendeten Doppelschichtkondensator - etwa 20 bis 25 Einzelkondensatoren zu einem Kondensatorstapel in Reihe geschaltet werden müssen.

Bedingt durch unterschiedliche Selbstentladung der Einzelzellen baut sich im Lauf der Zeit ein Ladungsungleichgewicht im Kondensatorstapel auf, welches den Doppelschichtkondensator letztendlich unbrauchbar macht, wenn kein Ladungsausgleich vorgenommen wird.

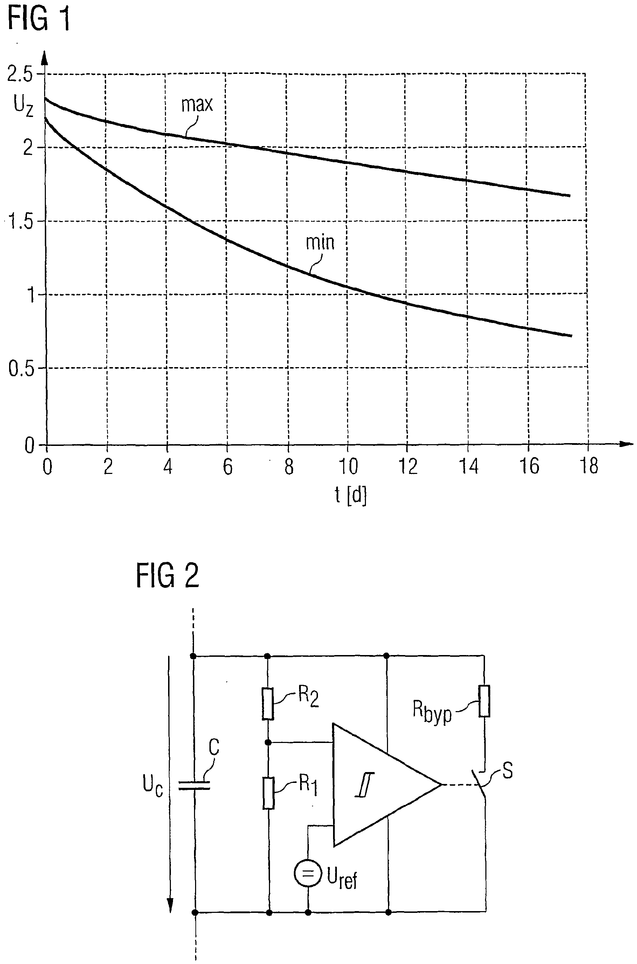

Extrapoliert man die Entladekurve auf Zeiträume von Wochen bis Monate, die beim Kraftfahrzeug relevant sind, so wird das bestehende Problem offensichtlich. Figur 1 zeigt beispielhaft den Streubereich der Kondensatorspannungen für einen Doppelschichtkondensator (Kondensatorstapel) mit 18 Zellen (Kondensatoren) über der Zeit. Die in Figur 1 dargestellte Streubreite (zwischen Maximum und Minimum) zeigt, wie weit die Selbstentladung der Einzelzellen innerhalb eines Kondensatorstapels mit der Zeit schwanken kann.

Ein einfacher Ladungsausgleich, beispielsweise durch geringes Überladen des Kondensatorstapels, wie bei einem Blei-Säure-Akkumulator, ist bei einem Doppelschichtkondensator jedoch nicht möglich.

Eine firmenintern bekannte Möglichkeit besteht darin, die Spannung jeder Einzelzelle mittels separater Elektronik (Operationsverstärker und Spannungsteiler R1/R2) zu überwachen und bei Erreichen oder Überschreiten eines vorgegebenen Maximalwertes U_{ref} eine Teilentladung mittels eines anschaltbaren Parallelwiderstandes R_{byp} herbeizuführen (Figur 2). Die Zelle entlädt sich dann über den Parallelwiderstand R_{byp} und seine Spannung U_{C} sinkt wieder unter den Maximalwert.

Wird der Maximalwert um einen vorbestimmten Spannungswert unterschritten, so wird der Parallelwiderstand R_{byp} wieder abgeschaltet.

Solch eine Schaltung verbraucht im passiven Zustand wenig Energie, jedoch wird der Ladungsausgleich durch Ladungsabbau (Energieverlust im Parallelwiderstand R_{byp}) erzielt. Diese Variante ist sinnvoll dort einzusetzen, wo ein Kondensatorstapel überwiegend nahe der Maximalspannung betrieben wird, etwa bei der Versorgung von Notstromanlagen.

Das Konzept ist jedoch darauf beschränkt, dass der Ladestrom in den Kondensatorstapel hinein kleiner sein muss als der Entladestrom der Ladungsausgleichsschaltung, da sonst trotzdem eine Überladung von einzelnen Kondensatoren beim Aufladen des Moduls nicht zu verhindern ist. Zudem kann das Ausgleichssystem nicht von extern eingeschaltet werden, sondern nur durch Überschreiten der vorbestimmten Spannungsschwelle aktiviert werden. Bei dem Betrieb in einem Kraftfahrzeug wird jedoch genau dieser Zustand nicht über eine längere Zeit erreicht. Ein so gestalteter Ladungsausgleich führt langfristig zu einer Unsymmetrie im Kondensatorstapel. Dies konnte bereits durch Messungen in einem Versuchsfahrzeug nachgewiesen werden.

Zusammengefasst hat eine solche Schaltungsanordnung folgende Nachteile:
- keine Rückmeldung an eine übergeordnete Betriebsführung, wenn eine Zelle die maximale Spannung überschritten hat (beispielsweise U_{C}>2,5V),
- keine Rückmeldung, ob die Zellenspannungen gleich groß sind und daher der Kondensatorstapel ausgeglichen ist,
- der Ausgleich wird nur aktiviert wenn die maximale Spannung überschritten wird,
- Energie wird während des Ausgleichsvorganges von Widerständen in Wärme umgewandelt,
- bei hohen Strömen von bis zu ca. 1kA, wie sie bei der oben beschriebenen Fahrzeugfunktionen Rekuperation (Regeneratives Bremsen) auftreten, ist ein derartig aufgebauter Ladungsausgleich ausgeschlossen.

Aus EP 0 432 639 B2 ist bekannt, bei einer Vielzahl von in Reihe geschalteten Akkumulatoren einen Ladungsausgleich zwischen einem schwach geladenen Akkumulator und der Gruppe der übrigen Akkumulatoren herbeizuführen, indem für jeden Einzelakkumulator des Akkumulatorstapels eine Vergleichsschaltung und eine Ladeschaltung (welche einen Rechteck-Funktionsgenerator aufweist) sowie eine Diode, ein Transformator und ein Unterbrecher vorgesehen sind.

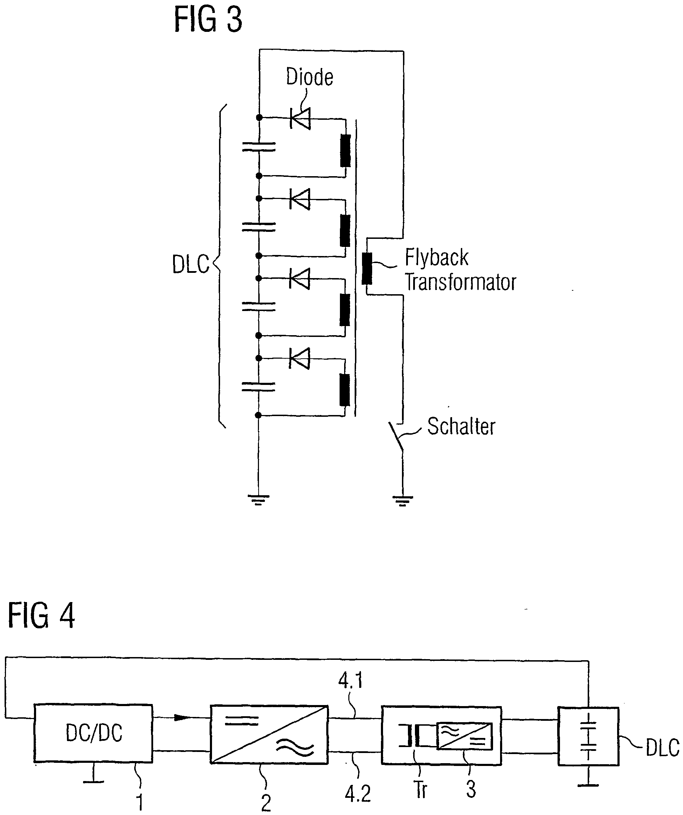

Mittels einer solchen, als Flyback-Converter nach dem Sperrwandlerprinzip arbeitenden Vorrichtung (Figur 3) wird dem gesamten Stapel Energie entnommen und diese anschließend in den am meisten entladenen Akkumulator zurückgespeist.

Dieser Aufwand mag für zwei oder drei Akkumulatoren gerechtfertigt sein, für einen Stapel aus zwanzig oder mehr Akkumulatoren/Kondensatorzellen ist er entschieden zu hoch.

Alternativ kann hier auch eine andere Energiequelle - etwa eine zusätzliche Batterie - genutzt werden, wodurch die Schaltung zusätzlich zum langsamen Aufladen des Kondensatorstapels dienen kann (DE 102 56 704 B3).

Diese Form des Ladungsausgleichs kann zudem unabhängig vom Erreichen einer maximalen Spannung des Einzelkondensators jederzeit durchgeführt werden, so dass sich ein gefährliches Ladungsungleichgewicht im Kondensatorstapel gar nicht erst aufbauen kann.

Es werden dabei nur Ladungen verschoben. Es wird dem Stapel langfristig keine Energie entnommen oder in Wärme umgesetzt. Dies macht das Konzept für Kraftfahrzeug-Anwendungen besonders attraktiv, da auch nach längerem Fahrzeugstillstand genügend Energie im Bordnetz vorhanden sein muss, um einen erfolgreichen Motorstart sicher zu gewährleisten.

Nachteilig bei der Ausführung ist allerdings, dass die Sekundärseite des Flyback-Transformators sehr viele Anschlüsse benötigt. Bei einem Kondensatorstapel mit beispielsweise 25 Einzelzellen, wie er für das 42V-Bordnetz benötigt wird, ergeben sich daraus 50 Anschlüsse. In der technischen Realisierung würde dies einen speziellen Wickelkörper erforderlich machen, der handelsüblich nicht verfügbar ist. Zudem bedarf jede Änderung der Zellenzahl im Stapel einer Anpassung des Transformators. Dies ist aber zu erwarten, da mit der technischen Weiterentwicklung des Doppelschichtkondensators die zulässige Maximalspannung von Generation zu Generation steigt und bei gegebener Modulspannung entsprechend weniger Einzelkondensatoren benötigt werden.

Alternativ kann der Flyback-Wandler durch einen DC/AC-Wandler mit einer Brückenschaltung ersetzt werden (US-A-5659237).

Auch ist die Leitungsführung vom Transformator zu den Kondensatorzellen aufwendig, da jeder Kontakt im Stapel separat verbunden werden muss. Im obigen Beispiel ergibt dies 26 Leitungen, sofern die Gleichrichterdioden am Transformator angeordnet sind; andernfalls sind es 50 Leitungen. Darüber hinaus sind diese Leitungen mit hochfrequenten Spannungspulsen aus den Schaltvorgängen des Flyback-Converters belastet und benötigen gesonderte EMV-Entstörmaßnahmen.

Ein weiterer Aspekt ist die Methode zum Betrieb des Flyback-Konverters. Marktübliche Ansteuerschaltungen (Schaltregler-ICs) arbeiten fast ausschließlich mit einer festen Schaltfrequenz. Die Aufladung des Magnetspeichers (Speicherinduktivität oder -transformator) erfolgt in der einen Phase, die Entladung, bzw. Energieübertragung in den Ausgangskreis erfolgt in der anderen Phase des Tak- tes. Dies ist vor allem sinnvoll, wenn neben dem geschalteten Strom auch ein Gleichstromanteil mit übertragen wird (nichtlückender Betrieb). Ganz generell versucht man, eine Schaltlücke - also den Zeitraum, in welchem das magnetische Speicherelement völlig entladen bleibt - zu vermeiden, da dann verstärkt Oszillationsneigungen auftreten und die Speichereigenschaften des Magnetkernes nicht optimal genutzt werden. Die Oszillationen sind in dem Resonanzkreis begründet, der aus Speicherinduktivität und Wicklungskapazität besteht, sowie der Tatsache, dass der Resonanzkreis anfangs der Schaltlücke angeregt ist und durch keine ohmsche Last bedämpft wird.

Im vorliegenden Anwendungsfall ist ein nichtlückender Betrieb jedoch nicht möglich, da bei kontinuierlichem Nachladen des Magnetspeichers jeweils vor dessen vollständiger Entladung eine Sättigung des Kernmaterials nicht zu vermeiden ist.

Es ist Aufgabe der Erfindung, eine Vorrichtung mit einem vereinfachten Aufbau zu schaffen, mittels welcher ein selbstgesteuerter Betrieb zum Ladungsausgleich zwischen den einzelnen in Serie geschalteten Zellen des Energiespeichers mit geringem technischem Aufwand erreicht werden kann.

Aufgabe der Erfindung ist es auch, ein Verfahren zum Ladungsausgleich der einzelnen Zellen zu schaffen, mit dessen Hilfe eine Funktionsüberwachung der Vorrichtung, der einzelnen Zellen und des Energiespeichers vorgenommen werden kann.

Diese Aufgabe wird erfindungsgemäß durch eine Vorrichtung gemäß den Merkmalen von Anspruch 1 und ein Verfahren zum Betreiben dieser Vorrichtung gemäß den Merkmalen von Anspruch 10 gelöst.

Bei zumindest zwei in Reihe geschalteten Energiespeichern wird die zum Ausgleich der gespeicherten Ladungen benötigte Energie über einen Wechselspannungsbus jeweils dem Energiespeicher, über dem die geringste Spannung abfällt, zugeführt.

Vorteilhafte Weiterbildungen der Erfindung sind den Unteransprüchen zu entnehmen.

Die Anbindung und Potentialtrennung der Doppelschichtkondensatoren erfolgt über Transformatoren.

Die Installation ist durch das Bussystem einfach durchführbar. Die einzelnen Energiespeicher werden über eine oder zwei Busleitungen versorgt. Es werden für die Schaltung nur wenige und preiswerte Komponenten benötigt. Bei diesen handelt es sich im Wesentlichen um Standardkomponenten.

Der Ausgleichsvorgang kann jederzeit aktiviert werden. Diese Aktivierung kann beispielsweise durch ein Steuergerät erfolgen, das den Aktivierungszeitpunkt aufgrund von Betriebsparametern eines Kraftfahrzeugs, insbesondere einer Brennkraftmaschine und/oder eines Starter-Generators, bestimmt.

Über die Ausgleichsschaltung kann ein Nachladen des Kondensatorstapels erfolgen. Auf diese Weise kann eine Serienschaltung leerer Energiespeicher aus einem weiteren Energiespeicher wieder aufgeladen werden und so beispielsweise ein Kraftfahrzeug, das längere Zeit stillstand, wieder startfähig gemacht werden.

Das Gesamtsystem ist einfach zu erweitern und dadurch leicht skalierbar.

Die Schaltungsanordnung eignet sich in besonderer Weise für eine Integration in den Stapel von in Reihe geschalteten Energiespeichern und/oder in das Gehäuse der einzelnen Zellen oder des gesamten Energiespeichers.

Als Energiespeicher eignen sich hier insbesondere Doppelschichtkondensatoren, auch Super- oder Ultra-Caps genannt.

Ausführungsbeispiele nach der Erfindung werden nachstehend anhand einer schematischen Zeichnung näher erläutert. In der Zeichnung zeigen:
- Figur 1: einen Verlauf der Kondensatorspannungen verschiedener Zellen eines Doppelschichtkondensators über der Zeit,
- Figur 2: eine bekannte Schaltungsanordnung zum Erzielen eines Ladungsausgleichs bei Energiespeichern,
- Figur 3: eine weitere bekannte Schaltungsanordnung zum Erzielen eines Ladungsausgleichs bei Energiespeichern,
- Figur 4: ein Blockschaltbild einer erfindungsgemäßen Ladungsausgleichsschaltung,
- Figur 5: ein erstes Ausführungsbeispiel einer Ladungsausgleichsschaltung,
- Figur 6: ein zweites Ausführungsbeispiel einer Ladungsausgleichsschaltung, und
- Figur 7: ein drittes Ausführungsbeispiel einer Ladungsausgleichsschaltung

Die Figuren 1 bis 3 sind bereits weiter oben erläutert worden.

Ein Blockschaltbild einer prinzipiellen Schaltung zum Ladungsausgleich von Energiespeichern nach der Erfindung ist in Figur 4 dargestellt. Durch einen ersten Wandler (DC/DC-Wand-ler 1) wird eine Gleichspannung erzeugt. Diese Gleichspannung wird über einen zweiten Wandler (DC/AC-Wandler 2) mit einer Pulsfrequenz von beispielsweise 50kHz wechselgerichtet und mit dieser Wechselspannung ein AC-Bus 4 beaufschlagt. Als Bus wird hier ein System von Leitern (Kabeln, Kupferschienen, etc.) bezeichnet.

An diesen Bus 4 sind über jeweils einen Koppeltransformator Tr und einen Gleichrichter 3 die in Reihe geschalteten Zellen Z1 bis Zn des Doppelschichtkondensators DLC angeschlossen. Die Koppeltransformatoren werden zur Potentialtrennung und Energieübertragung eingesetzt.

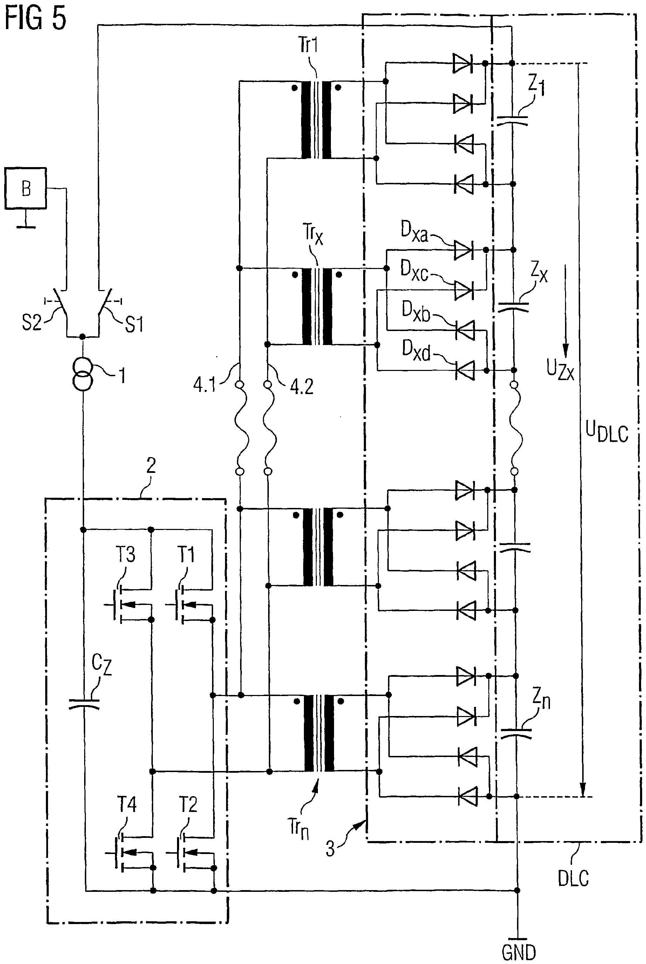

Figur 5 zeigt ein erstes Ausführungsbeispiel einer Schaltungsanordnung zum Ladungsausgleich von Energiespeichern (Zellen). Die über einer Reihenschaltung der einzelnen Zellen Z₁ bis Zₙ des Doppelschichtkondensators DLC abfallende Spannung U_{DLC} wird dem DC/DC-Wandler 1, beispielsweise einem stromgeregelten Tiefsetzsteller, über einen ersten Schalter S1 zugeführt. Über einen zweiten Schalter 2 kann zusätzlich oder alternativ eine Energiequelle, beispielsweise ein Akkumulator B, mit dem DC/DC-Wandler 1 verbunden werden.

Der DC/DC-Wandler 1 ist mit dem Eingang eines DC/AC-Wandlers 2 elektrisch verbunden, welcher einen Zwischenkreiskondensator C_{Z} und eine Vollbrückenschaltung mit zwei Halbbrücken aufweist, bestehend aus erstem und zweitem Transistor T1-T2 bzw. drittem und viertem Transistor T3-T4, deren Ausgänge, die Verbindungspunkte der Transistoren T1-T2 bzw. T3-T4, mit je einer Bus-Leitung 4.1, 4.2 verbunden sind. Jede Busleitung wird über die ihr zugeordnete Halbbrücke mit Energie versorgt.

Jeder Zelle Z₁ bis Zₙ ist
a) ein Koppeltransformator Tr₁ bis Trₙ zugeordnet, dessen Primärwicklung zwischen den beiden Busleitungen 4.1 und 4.2 liegt, und
b) eine Gleichrichterschaltung 3 zugeordnet, welche zwischen der Sekundärwicklung des zugeordneten Koppeltransformators und der Zelle selbst liegt.

Beispielhaft für eine Zelle Zₓ (x = 1 bis n) bedeutet dies:
der erste Anschluss der Sekundärwicklung des Koppeltransformators Trₓ ist über eine zur Zelle Zₓ hin stromleitende Diode Dₓₐ mit dem positiven Anschluss der Zelle Zₓ verbunden und über eine von der Zelle weg stromleitende Diode D_{xb} mit dem negativen Anschluss der Zelle Zₓ verbunden und
der zweite Anschluss der Sekundärwicklung des Koppeltransformators Trₓ ist über eine zur Zelle Zₓ hin stromleitende Diode D_{xc} mit dem positiven Anschluss der Zelle Zₓ verbunden und über eine von der Zelle weg stromleitende Diode D_{xd} mit dem negativen Anschluss der Zelle Zₓ verbunden.

Die vier Gleichrichterdioden Dₓₐ bis D_{xd} bilden also jeweils einen Grätz-Gleichrichter.

Der DC/AC-Wandler 2 arbeitet mit einer Pulsfrequenz von beispielsweise 50kHz. Da anschließend Koppeltransformatoren eingesetzt sind, die in ihrer Aussteuerbarkeit begrenzt sind, ist auf ein gleichspannungsfreies Signal auf dem AC-Bus zu achten.

Bei Ansteuerung der AC-Busleitungen 4.1 und 4.2 erscheint auf der Sekundärseite der Koppeltransformatoren eine Wechselspannung. Erreicht diese Wechselspannung die Summe aus Zellenspannung U_{Zx} derjenigen Zelle Zₓ mit der geringsten Zellenspannung und zweier Diodenflussspannungen, so wird sie mittels der nachfolgenden Gleichrichterschaltung 3 zu einer pulsierenden Gleichspannung gleichgerichtet und führt an dieser Zelle zu einem Stromfluss. Alle anderen Zellen werden, je nach Zellenspannung, davon nicht oder, je nach Zellenspannung U_{Zx}, nur minimal beeinflusst.

Die Energie, mit der die Zelle Zₓ, welche die geringste Zellenspannung U_{Zx} aufweist, geladen wird, kommt aus dem Zwischenkreiskondensator C_{Z}, der sich durch diese Belastung einerseits und durch die konstante Nachladung andererseits auf die erforderliche Spannung selbsttätig einstellt.

Transformatoren mit geringer Streuung und Dioden mit geringer Durchlassspannung erweisen sich als besonders geeignet.

Die beiden mit einem Rechtecksignal angesteuerten Halbbrücken des DC/AC-Wandlers 2 arbeiten gegenphasig, d.h., wenn die Transistoren T1 und T4 in der ersten Phase stromleitend sind, sind die Transistoren T2 und T3 nicht leitend; in der zweiten Phase ist es umgekehrt: hier sind die Transistoren T2 und T3 stromleitend, während die Transistoren T1 und T4 nicht leitend sind.

Durch den DC/DC-Wandler 1 wird die Energie dem gesamten aus den in Reihe geschalteten einzelnen Zellen Zₓ bestehenden Kondensatorstapel, also dem Doppelschichtkondensator DLC, entnommen. Wahlweise oder zusätzlich kann dem System über einen zusätzlichen Schalter S2 Energie zugeführt werden.

In der ersten Phase fließt ein Strom vom Zwischenkreiskondensator C_{Z} über Transistor T1 und Busleitung 4.1 in die Primärwicklung des Koppeltransformators Trₓ und zurück über die Busleitung 4.2 und Transistor T4 zum Zwischenkreiskondensator C_{Z}.

In der zweiten Phase fließt ein Strom vom Zwischenkreiskondensator C_{Z} über Transistor T3 und Busleitung 4.2 in die Primärwicklung des Koppeltransformators Trₓ (jetzt in Gegenrichtung) und zurück über die Busleitung 4.1 und Transistor T2 zum Zwischenkreiskondensator C_{Z}.

Durch die Ansteuerung der Primärwicklungen steigt die Spannung an den Sekundärwicklungen aller Koppeltransformatoren Tr₁ bis Trₙ solange, bis sie der Zellenspannung der am wenigsten geladenen Zelle Zₓ plus zwei Diodenspannungen entspricht.

Diese Spannung bewirkt in der ersten Phase einen Stromfluss vom ersten Anschluss der Sekundärwicklung durch Diode Dₓₐ, die am wenigsten geladene Zelle Zₓ und die Diode D_{xd} zurück zum zweiten Anschluss der Sekundärwicklung, wodurch die Zelle Zₓ geladen wird.

In der zweiten Phase bewirkt die nun umgekehrte Spannung gleicher Größe an der Sekundärwicklung des Koppeltransformators Trₓ einen Stromfluss vom zweiten Anschluss der Sekundärwicklung durch Diode D_{xc}, die Zelle Zₓ und die Diode D_{xb} zurück zum ersten Anschluss der Sekundärwicklung, wodurch die Zelle Zₓ ebenfalls geladen wird.

Dadurch wird eine sehr effiziente Nachladung der am stärksten entladenen Zelle Zₓ erreicht.

Diese Zelle wird solange geladen, bis ihre Zellenspannung die nächsthöhere Zellenspannung einer weiteren Zelle erreicht. Der pulsierende Gleichstrom fließt dann durch diese beiden Zellen u.s.w., bis alle Zellen die gleiche Zellenspannung aufweisen.

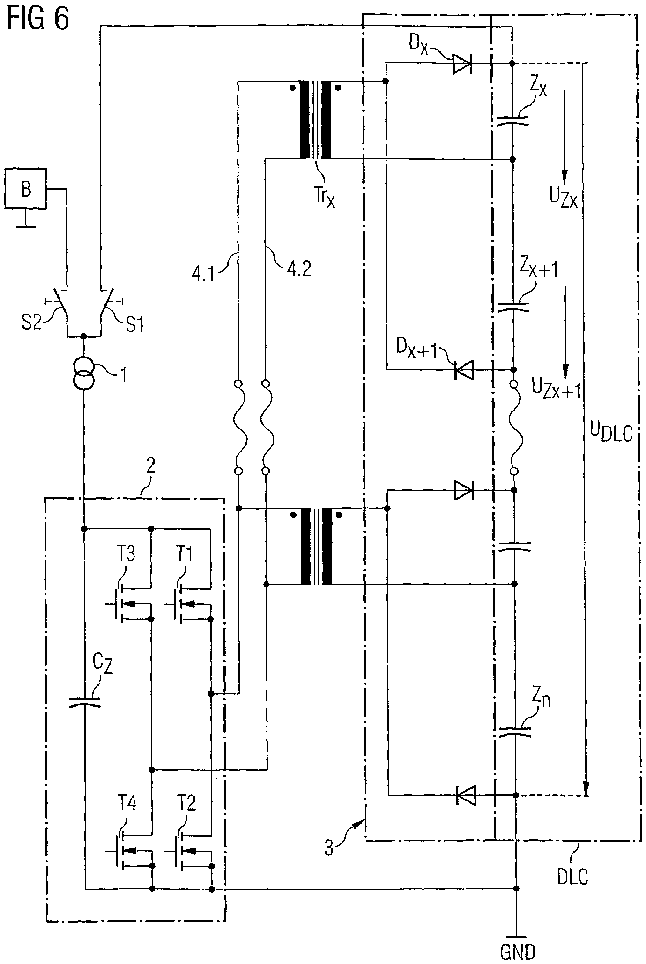

Figur 6 zeigt ein zweites Ausführungsbeispiel einer erfindungsgemäßen Schaltungsanordnung zum Ladungsausgleich von Energiespeichern (Zellen).

Dieses Ausführungsbeispiel unterscheidet sich von dem ersten Ausführungsbeispiel nach Figur 5 lediglich dadurch, dass jeweils einem Koppeltransformator mit einer Sekundärwicklung zwei benachbarte - miteinander in Reihe liegende - Zellen zugeordnet sind.

Für zwei benachbarte Zellen Zₓ und Zₓ₊₁ ist der erste Anschluss der Sekundärwicklung des zugeordneten Koppeltransformators Trₓ über eine zur Zelle Zₓ hin stromleitende Diode Dₓ mit dem positiven Anschluss der einen Zelle Zₓ verbunden und über eine von der Zelle weg stromleitende Diode Dₓ₊₁ mit dem negativen Anschluss der anderen Zelle Zₓ₊₁ verbunden. Der zweite Anschluss der Sekundärwicklung ist direkt mit dem Verbindungspunkt der beiden Zellen Zₓ und Zₓ₊₁ verbunden.

Die Ansteuerung der Primärwicklungen der Koppeltransformatoren erfolgt ebenso, wie bereits bei dem Ausführungsbeispiel nach Figur 5 beschrieben.

In der ersten Phase steigt, wie bereits bei dem Ausführungsbeispiel nach Figur 5 beschrieben, die Spannung an den Sekundärwicklungen der Koppeltransformatoren Trₓ solange, bis sie die Zellenspannung U_{Zx} der Zelle Zₓ mit der geringsten Zellenspannung U_{Zx} plus einer Diodenspannung entspricht.

Diese Spannung bewirkt einen Stromfluss vom ersten Anschluss der Sekundärwicklung durch Diode Dₓ, die Zelle Zₓ und zurück zum zweiten Anschluss der Sekundärwicklung, wodurch die Zelle Zₓ geladen wird.

In der anderen Phase bewirkt die nun umgekehrte Spannung an der Sekundärwicklung des Koppeltransformators Trₓ einen Stromfluss vom zweiten Anschluss der Sekundärwicklung durch die Zelle Zₓ₊₁, die Diode Dₓ₊₁ und zurück zum ersten Anschluss der Sekundärwicklung, wodurch die Zelle Zₓ₊₁ ebenfalls geladen wird, wenn ihre Zellenspannung der Zellenspannung U_{Zx} entspricht. Ist ihre Zellenspannung U_{Zx+1} höher, so kann kein Strom durch die Zelle Zₓ₊₁ fließen.

Die Zelle Zₓ wird solange geladen, bis ihre Zellenspannung die nächsthöhere Zellenspannung einer weiteren Zelle erreicht. Der pulsierende Gleichstrom fließt dann durch diese beiden Zellen u.s.w., bis alle Zellen die gleiche Zellenspannung aufweisen.

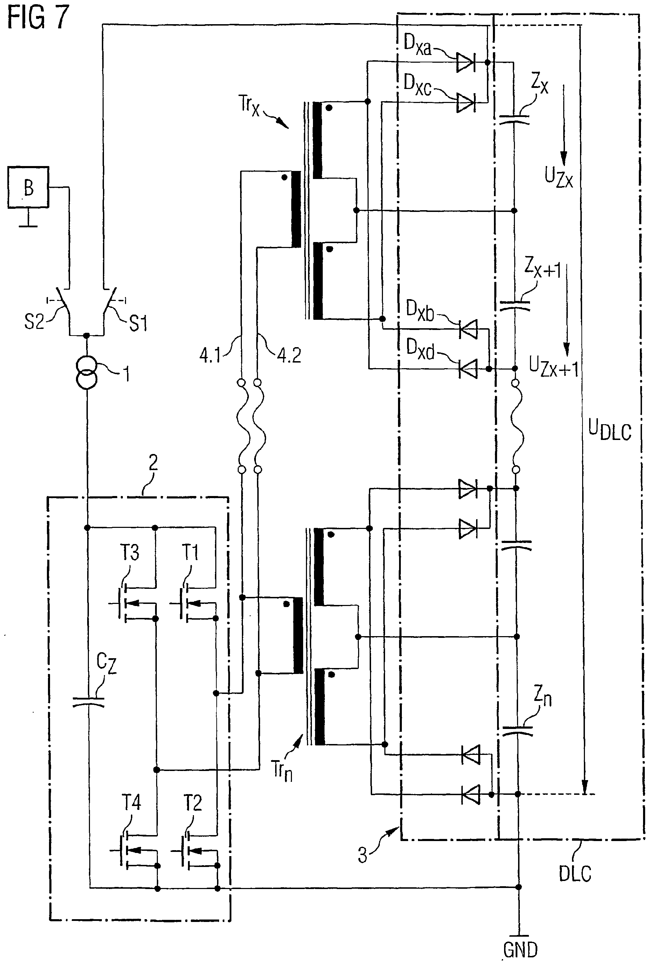

Figur 7 zeigt ein drittes Ausführungsbeispiel einer erfindungsgemäßen Schaltungsanordnung zum Ladungsausgleich von Energiespeichern (Zellen).

Dieses Ausführungsbeispiel unterscheidet sich von dem zweiten Ausführungsbeispiel nach Figur 6 dadurch, dass Koppeltransformatoren mit zwei Sekundärwicklungen und einer Mittelanzapfung Verwendung finden, wobei jede Sekundärwicklung einer Zelle zugeordnet ist.

Für zwei benachbarte Zellen Zₓ und Zₓ₊₁ ist der erste Anschluss der ersten Sekundärwicklung des zugeordneten Koppeltransformators Trₓ
a) über eine zur ersten Zelle hin stromleitende erste Diode Dₓₐ mit dem positiven Anschluss der ersten Zelle Zₓ verbunden, und
b) über eine von der Zelle weg stromleitende zweite Diode D_{xb} mit dem negativen Anschluss der zweiten Zelle Zₓ₊₁ verbunden, und ist
   der zweite Anschluss der zweiten Sekundärwicklung des zugeordneten Koppeltransformators Trₓ
c) über eine zur Zelle hin stromleitende dritte Diode D_{xc} mit dem positiven Anschluss der ersten Zelle Zₓ verbunden, und
d) über eine von der Zelle weg stromleitende vierte Diode D_{xd} mit dem negativen Anschluss der zweiten Zelle Zₓ₊₁ verbunden.

Die Mittelanzapfung der beiden Sekundärwicklungen, also der zweite Anschluss der ersten Sekundärwicklung und der erste Anschluss der zweiten Sekundärwicklung, ist direkt mit dem Verbindungspunkt der beiden Zellen Zₓ und Zₓ₊₁ verbunden.

Die Ansteuerung der Primärwicklungen der Koppeltransformatoren erfolgt ebenso, wie bereits bei dem Ausführungsbeispiel nach Figur 5 beschrieben.

In der ersten Phase steigt, wie bereits früher beschrieben, die Spannung an den Sekundärwicklungen der Koppeltransformatoren Trₓ solange, bis sie der Zellenspannung U_{Zx} der Zelle Zₓ mit der geringsten Zellenspannung U_{Zx} plus einer Dioden-Flussspannung entspricht.

Diese Spannung bewirkt einen Stromfluss vom ersten Anschluss der der ersten Zelle zugeordneten ersten Sekundärwicklung durch die erste Diode Dₓₐ, die erste Zelle Zₓ und zurück zur Mittelanzapfung, wodurch die Zelle Zₓ geladen wird.

Da die zweite Zelle Zₓ₊₁, wie angenommen, eine höhere Zellenspannung U_{Zx+1} aufweist als die erste Zelle Zₓ, so kann in der ersten Phase kein Strom durch Zelle Zₓ₊₁ fließen.

Ist die Zellenspannung U_{Zx+1} der zweiten Zelle Zₓ₊₁ jedoch gleich derjenigen der ersten Zelle Zₓ, so fließt in der ersten Phase auch ein Strom von der Mittelanzapfung durch die zweite Zelle Zₓ₊₁, und über die zweite Diode D_{xb} zurück zum zweiten Anschluss der zweiten Sekundärwicklung.

In der zweiten Phase bewirkt die nun umgekehrte Spannung an den Sekundärwicklungen des Koppeltransformators Trₓ einen Stromfluss vom zweiten Anschluss der zweiten Sekundärwicklung durch die dritte Diode D_{xc}, die erste Zelle Zₓ und zurück zum ersten Anschluss der zweiten Sekundärwicklung, wodurch die Zelle Zₓ ebenfalls geladen wird.

Da die Zelle Zₓ₊₁ eine höhere Zellenspannung U_{Zx+1} aufweist als Zelle Zₓ, so kann auch in der anderen Phase kein Strom durch Zelle Zₓ₊₁ fließen.

Ist die Zellenspannung U_{Zx+1} der zweiten Zelle Zₓ₊₁ jedoch gleich niedrig wie die der ersten Zelle Zₓ, so fließt in der zweiten Phase auch ein Strom von der Mittelanzapfung durch die zweite Zelle Zₓ₊₁ und über die vierte Diode D_{xd} zurück zum ersten Anschluss der ersten Sekundärwicklung.

Die Zelle Zₓ wird nun solange geladen, bis ihre Zellenspannung die nächsthöhere Zellenspannung einer weiteren Zelle erreicht. Der pulsierende Gleichstrom fließt dann durch diese beiden Zellen u.s.w., bis alle Zellen die gleiche Zellenspannung aufweisen.

Die Schaltungen aller drei Ausführungsbeispiele benötigen keine komplexen, teuren Einzelbauteile.

Durch die Struktur der AC-Bussleitungen 4.1 und 4.2 ist das System leicht erweiterbar. Zusätzliche Energiespeicher können einfach an den Bus angeschlossen werden.

Die Ladungsausgleichschaltung nach der Erfindung kann auch zum Ladungsausgleich von anderen Energiespeichern, beispielsweise von in Reihe geschalteten Akkumulatoren, verwendet werden.

Diese Schaltungsanordnungen (DLC, Gleichrichterdioden, Koppelkondensatoren und Busleitungen können sowohl in Gehäuse für die einzelnen Zellen als auch in ein für alle Zellen gemeinsames Gehäuse integriert werden. Auf diese Weise kann eine kompakte Einheit aufgebaut werden, die lediglich drei oder vier Anschlüsse aufweist.

## Patentansprüche

1. Vorrichtung zum Ladungsausgleich von in Reihe angeordneten einzelnen Zellen (Zₓ) eines Energiespeichers (DLC),
**dadurch gekennzeichnet,**
**dass** ein DC/DC-Wandler (1) vorgesehen ist, dessen Eingang über einen ersten Schalter (S1) mit dem positiven Anschluss des Energiespeichers (DLC) verbunden ist, dass ein mit dem Ausgang des DC/DC-Wandler (1) verbundener DC/AC-Wandler (2) vorgesehen ist, welcher einen Zwischenkreiskondensator (C_{Z}) und eine Brückenschaltung (T1 bis T4) enthält,
**dass** zwei dem DC/AC-Wandler (2) nachgeschaltete AC-Busleitungen (4.1, 4.2) vorgesehen sind, und
**dass** zwischen jedem Paar benachbarter Zellen (Zₓ, Zₓ₊₁, mit x = 1 bis n) ein Koppeltransformator (Trₓ) mit einer Sekundärwicklung und einer Primärwicklung oder zwischen jedem Paar benachbarter Zellen (Zₓ, Z_{x+1, mit} x = 1 bis n) ein Koppeltransformator (Trₓ) mit zwei Sekundärwicklungen und einer Primärwicklung und jeweils ein Gleichrichter (3) angeordnet ist und
**dass** die Primärwicklung jedes Koppeltransformators (Trₓ) zwischen den beiden AC-Busleitungen (4.1, 4.2) angeordnet ist.

2. Vorrichtung nach Anspruch 1, **dadurch gekennzeichnet, dass** der Energiespeicher (DLC) ein Doppelschichtkondensator ist.

3. Vorrichtung nach Anspruch 1, **dadurch gekennzeichnet, dass** der Energiespeicher (DLC) aus einer Reihenschaltung von Akkumulatoren besteht.

4. Vorrichtung nach Anspruch 1, **dadurch gekennzeichnet, dass** der DC/DC-Wandler (1) über einen zweiten Schalter (S2) mit einer weiteren Energiequelle (B) verbindbar ist.

5. Vorrichtung nach Anspruch 1, **dadurch gekennzeichnet, dass** der DC/DC-Wandler (1) ein stromgeregelter Tiefsetzsteller ist.

6. Vorrichtung nach Anspruch 1, **dadurch gekennzeichnet, dass** die Brückenschaltung des DC/AC-Wandlers (2) mehrphasig ausgebildet ist, wobei jede Phase als Halbbrücke aus zwei in Reihe liegenden Transistoren (T1-T2, T3-T4) besteht, die parallel zum Zwischenkreiskondensator (C_{Z}) angeordnet ist.

7. Vorrichtung nach Anspruch 6, **dadurch gekennzeichnet, dass** die Brückenschaltung des DC/AC-Wandlers (2) selbstgetaktet ist.

8. Vorrichtung nach Anspruch 1, **dadurch gekennzeichnet, dass** jeweils zwei benachbarten Zellen (Zₓ, Zₓ₊₁) des Energiespeichers (DLC) ein Koppeltransformator (Trₓ) mit einer Sekundärwicklung zugeordnet ist, wobei der zwischen der Sekundärwicklung des Koppeltransformators (Trₓ) und den Zellen (Zₓ, Zₓ₊₁) angeordnete Gleichrichter (3) so ausgebildet ist,
dass der erste Anschluss der Sekundärwicklung des zugeordneten Koppeltransformators (Trₓ) über eine zur Zelle (Zₓ) hin stromleitende Diode (Dₓ) mit dem positiven Anschluss der einen Zelle (Zₓ) verbunden ist, und über eine von der Zelle weg stromleitende Diode (Dₓ₊₁) mit dem negativen Anschluss der anderen Zelle (Zₓ₊₁) verbunden ist, und
dass der zweite Anschluss der Sekundärwicklung direkt mit dem Verbindungspunkt der beiden Zellen (Zₓ, Zₓ₊₁) verbunden ist.

9. Vorrichtung nach Anspruch 1, **dadurch gekennzeichnet, dass** jeweils zwei benachbarten Zellen (Zₓ, Zₓ₊₁) des Energiespeichers (DLC) ein Koppeltransformator (Trₓ) mit zwei Sekundärwicklungen und einer Mittelanzapfung zugeordnet ist, wobei der zwischen den Sekundärwicklungen des Koppeltransformators (Trₓ) und den Zellen (Zₓ, Zₓ₊₁) angeordnete Gleichrichter (3) so ausgebildet ist, dass der erste Anschluss der ersten Sekundärwicklung des zugeordneten Koppeltransformators (Trₓ) über eine zur Zelle hin stromleitende Diode (Dₓₐ) mit dem positiven Anschluss der ersten Zelle (Zₓ) verbunden ist, und über eine von der Zelle weg stromleitende Diode (D_{xb}) mit dem negativen Anschluss der zweiten Zelle (Zₓ₊₁) verbunden ist, und
dass der zweite Anschluss der zweiten Sekundärwicklung des zugeordneten Koppeltransformators (Trₓ) über eine zur Zelle hin stromleitende Diode (D_{xc}) mit dem positiven Anschluss der ersten Zelle (Zₓ) verbunden ist, und über eine von der Zelle weg stromleitende Diode (D_{xd}) mit dem negativen Anschluss der zweiten Zelle (Zₓ₊₁) verbunden ist, und
dass die Mittelanzapfung der beiden Sekundärwicklungen direkt mit dem Verbindungspunkt der beiden Zellen (Zₓ, Zₓ₊₁) ver-bunden ist.

10. Verfahren zum Betreiben der Vorrichtung nach Anspruch 1, **dadurch gekennzeichnet,**
**dass** der vom Energiespeicher (DLC) oder der weiteren Energiequelle (B) gespeiste DC/DC-Wandler (1) dem Zwischenkreiskondensator (C_{Z}) einen Strom zuführt, wodurch sich an diesem eine Spannung (U_{CZ}) zum Laden der Zellen (Zₓ) aufbaut, und
**dass** der DC/AC-Wandler (2) diese Spannung (U_{CZ}) wechselrichtet und über die AC-Busleitungen (4.1, 4.2) auf die Sekundärseite der Koppeltransformatoren (Trₓ) überträgt,
wobei zwischen jedem Paar benachbarter Zellen (Zₓ, Zₓ₊₁, mit x = 1 bis n) und den AC-Busleitungen (4.1, 4.2) jeweils ein Koppeltransformator (Trₓ) mit ein oder zwei Sekundärwicklungen und jeweils ein Gleichrichter (3) angeordnet sind
und
**dass** diese sekundäre Wechselspannung mittels der Dioden (Dₓₐ bis D_{xd}, Dₓ, Dₓ₊₁, mit x = 1 bis n) des Gleichrichters (3) in einen gleichgerichteten, pulsierenden Ladestrom für die Zelle (Zₓ) mit der geringsten Zellenspannung (U_{zx}) umgewandelt wird, sobald sie einen der Summe aus Zellenspannung (UZₓ) der Zelle (Zₓ) mit der geringsten Zellenspannung und einer oder zweier Diodenflussspannungen entsprechenden Wert erreicht.

11. Verfahren nach Anspruch 10 zum Betreiben der Vorrichtung nach Anspruch 1 oder 8, bei welcher je zwei benachbarten Zellen (Zₓ, Zₓ₊₁) ein Koppeltransformator (Trₓ) mit einer Sekundärwicklung zugeordnet ist,
**dadurch gekennzeichnet,**
**dass** die Sekundärspannung des Koppeltransformators (Trₓ) in der ersten Phase einen Stromfluss vom ersten Anschluss der ersten Sekundärwicklung durch die erste Diode (Dₓ), die erste Zelle (Zₓ) mit der geringsten Zellenspannung (U_{Zx}) und zurück zum zweiten Anschluss der Sekundärwicklung bewirkt, und
in der zweiten Phase keinen Stromfluss bewirkt.

12. Verfahren nach Anspruch 11, **dadurch gekennzeichnet, dass** bei Gleichheit der beiden Zellenspannungen (U_{Zx}, U_{Zx+1}) die Sekundärspannung des Koppeltransformators (Trₓ) in der zweiten Phase einen Stromfluss vom zweiten Anschluss der Sekundärwicklung durch die zweite Zelle (Zₓ₊₁) und über die zweite Diode Dₓ₊₁ zurück zum ersten Anschluss der Sekundärwicklung bewirkt.

13. Verfahren nach Anspruch 10 zum Betreiben der Vorrichtung nach Anspruch 1 oder 9, bei welcher je zwei benachbarten Zellen (Zₓ, Zₓ₊₁) ein Koppeltransformator (Trₓ) mit zwei Sekundärwicklungen und Mittelanzapfung zugeordnet ist,
**dadurch gekennzeichnet,**
**dass** die Sekundärspannung des Koppeltransformators (Trₓ) in der ersten Phase einen Stromfluss vom ersten Anschluss der ersten Sekundärwicklung durch die erste Diode (Dₓₐ), die erste Zelle (Zₓ) mit der geringsten Zellenspannung (U_{Zx}) und zurück zur Mittelanzapfung bewirkt, und
in der zweiten Phase einen Stromfluss vom zweiten Anschluss der zweiten Sekundärwicklung durch die dritte Diode (D_{xc}), dir erste Zelle (Zₓ) und zurück zur Mittelanzapfung bewirkt.

14. Verfahren nach Anspruch 13, **dadurch gekennzeichnet, dass** bei Gleichheit der beiden Zellenspannungen (U_{Zx}, U_{Zx+1}) die Sekundärspannung des Koppeltransformators (Trₓ) in der ersten Phase auch einen Stromfluss von der Mittelanzapfung durch die zweite Zelle (Zₓ₊₁) und die zweite Diode (D_{xb}) zurück zum zweiten Anschluss der zweiten Sekundärwicklung bewirkt, und
in der zweiten Phase auch einen Stromfluss von der Mittelanzapfung durch die zweite Zelle (Zₓ₊₁) und die vierte Diode (D_{xd}) zurück zum ersten Anschluss der ersten Sekundärwicklung bewirkt.

## Claims

1. Device for equalising charges of individual cells (Zₓ) arranged in series of an energy store (DLC),
**characterised in that**
a DC/DC converter (1) is provided which is connected via a first switch (S1) to the positive terminal of the energy store (DLC),
a DC/AC converter (2) connected to the output of the DC/DC converter (1) is provided, which contains an intermediate circuit capacitor (C_{Z}) and a bridge circuit (T1 to T4), two AC bus lines (4.1, 4.2) connected downstream from the DC/AC converter (2) are provided, and
between each pair of adjacent cells (Zₓ, Zₓ₊₁, with x = 1 to n) a coupling transformer (Trₓ) with a secondary winding and a primary winding is arranged or between each pair of adjacent cells (Zₓ, Zₓ₊₁, with x = 1 to n) a coupling transformer (Trₓ) with two secondary windings and a primary winding and a rectifier (3) in each case is arranged, and that the primary winding of each coupling transformer (Trₓ) is arranged between the two AC bus lines (4.1, 4.2).

2. Device according to claim 1, **characterised in that** the energy store (DLC) is a double-layer capacitor.

3. Device according to claim 1, **characterised in that** the energy store (DLC) consists of a series circuit of accumulators.

4. Device according to claim 1, **characterised in that** the DC/DC converter (1) is able to be connected via a second switch (S2) to a further source of energy (B).

5. Device according to claim 1, **characterised in that** the DC/DC converter (1) is a current-regulated step-down converter.

6. Device according to claim 1, **characterised in that** the bridge circuit of the DC/AC converter (2) is embodied as a multiphase circuit, with each phase being arranged as a half-bridge consisting of two transistors (T1-T2, T3-T4) arranged in series, which is arranged in parallel to the intermediate circuit capacitor (C_{Z}).

7. Device according to claim 6, **characterised in that** the bridge circuit of the DC/AC converter (2) is self-clocked.

8. Device according to claim 1, **characterized in that** a coupling transformer (Trₓ) with a secondary winding is assigned to two adjacent cells (Zₓ, Zₓ₊₁) of the energy store (DLC) in each case, with the rectifier (3) arranged between the secondary windings of the coupling transformer (Trₓ) and the cells (Zₓ, Zₓ₊₁) being embodied so that the first terminal of the secondary winding of the assigned coupling transformer (Trₓ) is connected to the positive terminal of the one cell (Zₓ) via a diode (Dₓ) conducting current to the cell and is connected to the negative terminal of the other cell (Zₓ₊₁) via a diode (Dₓ₊₁) conducting current away from the cell and
the second terminal of the secondary winding is connected directly to the connection point of the two cells (Zₓ, Zₓ₊₁)

9. Device according to claim 1, **characterized in that** a coupling transformer (Trₓ) with two secondary windings and a centre tap is assigned to two adjacent cells (Zₓ, Zₓ₊₁) of the energy store (DLC) in each case, with the rectifier (3) arranged between the secondary windings of the coupling transformer (Trₓ) and the cells (Zₓ, Zₓ₊₁) being embodied so that
the first terminal of the first secondary winding of the assigned coupling transformer (Trₓ) is connected to the positive terminal of the first cell (Zₓ) via a diode (Dₓₐ) conducting current to the cell and is connected to the negative terminal of the second cell (Zₓ₊₁) via a diode (D_{xb}) conducting current away from the cell and
the second terminal of the second secondary winding of the assigned coupling transformer (Trₓ) is connected to the positive terminal of the first cell (Zₓ) via a diode (D_{xc}) conducting current to the cell and is connected to the negative terminal of the second cell (Zₓ₊₁) via a diode (D_{xd}) conducting current away from the cell, and
the centre tap of the two secondary windings is connected directly to the connection point of the two cells (Zₓ, Zₓ₊₁).

10. Method for operating the device according to claim 1, **characterised in that**
the DC/DC converter (1) fed by the energy store (DLC) or the further source of energy (B) conducts a current to the intermediate circuit capacitor (C_{z}) by which a voltage (U_{CZ}) is built up at this capacitor for charging the cells (Zₓ), and
the DC/AC converter (2) inverts this voltage (U_{CZ}) and transmits it over the AC bus lines (4.1, 4.2) to the secondary side of the coupling transformers (Trₓ), with a coupling transformer (Trₓ) with one or two secondary windings and a rectifier (3) in each case being arranged between each pair of adjacent cells (Zₓ, Zₓ₊₁, with x = 1 to n) and the AC bus lines (4.1, 4.2)
and
this secondary alternating current is converted by means of the diodes (Dₓₐ to D_{xd}, Dₓ, Dₓ₊₁, with x = 1 to n) of the rectifier (3) into a rectified, pulsing charge current for the cell (Zₓ) with the lowest cell voltage (U_{Zx}), as soon as it reaches a value corresponding to the sum of the cell voltage (U_{Zx}) of the cell (Zₓ) with the lowest cell voltage and one or two diode forward voltages.

11. Method according to claim 10 for operating the device according to claim 1 or 8, in which each of two adjacent cells (Zₓ, Zₓ₊₁) is assigned a coupling transformer (Trₓ) with a secondary winding,
**characterised in that**
the secondary voltage of the coupling transformer (Trₓ) in the first phase causes a current flow from the first terminal of the first secondary winding through a first diode (Dₓ), the first cell (Zₓ) with the lowest cell voltage (U_{Zx}) and back to the second terminal of the secondary winding, and
does not cause any current flow in the second phase.

12. Method according to claim 11, **characterised in that**, if the two cell voltages (U_{Zx}, U_{Zx+1}) are equal, the secondary voltage of the coupling transformer (Trₓ) in the second phase causes a current flow from the second terminal of the secondary winding through the second cell (Zₓ₊₁) and via the second diode Dₓ₊₁ back to the first terminal of the secondary winding.

13. Method according to claim 10 for operating the device according to claim 1 or 9, in which a coupling transformer (Trₓ) with two secondary windings and a centre tap is assigned to two adjacent cells (Zₓ, Zₓ₊₁) in each case, **characterised in that**,
the secondary voltage of the coupling transformer (Trₓ) in the first phase causes a current flow from the first terminal of the first secondary winding through the first diode (Dₓₐ), the first cell (Zₓ) with the lowest cell voltage (U_{Zx}) and back to the centre tap, and
in the second phase causes a current flow from the second terminal of the second secondary winding through the third diode (D_{xc}), the first cell (Zₓ) and back to the centre tap.

14. Method according to claim 16, **characterized in that**, if the two cell voltages (U_{Zx}, U_{Zx+1}) are equal, the secondary voltage of the coupling transformer (Trₓ)
in the first phase also causes a current flow from the centre tap through the second cell (Zₓ₊₁) and the second diode (D_{xb}) back to the second terminal of the second secondary winding, and
in the second phase also causes a current flow from the centre tap through the second cell (Zₓ₊₁) and the fourth diode (D_{xd}) back to the first terminal of the first secondary winding.

## Revendications

1. Dispositif d'équilibrage des charges d'éléments individuels (Zₓ) agencés en série d'un accumulateur d'énergie (DLC),
**caractérisé en ce que**
il est prévu un convertisseur CC/CC (1), dont une entrée est connectée via un premier commutateur (S1) à la borne positive de l'accumulateur d'énergie (DLC), et un convertisseur CC/CA (2) connecté à la sortie du convertisseur CC/CC (1), lequel convertisseur CC/CA contient un condensateur de circuit intermédiaire (C_{Z}) et un circuit en pont (T1 à T4),
il est prévu deux lignes omnibus CA (4.1, 4.2) connectées en aval au convertisseur CC/CA (2) et **en ce que**, entre chaque paire d'éléments voisins (Zₓ, Zₓ₊₁, avec x = 1 à n), un transformateur de liaison (Trₓ) est agencé avec un enroulement secondaire et un enroulement primaire ou, entre chaque paire d'éléments voisins (Zₓ, Zₓ₊₁, avec x = 1 à n), un transformateur de liaison (Trₓ) est agencé avec deux enroulements secondaires et un enroulement primaire et, respectivement, un redresseur (3), et
l'enroulement primaire de chaque transformateur de liaison (Trₓ) est agencé entre les deux lignes omnibus CA (4.1, 4.2).

2. Dispositif selon la revendication 1, **caractérisé en ce que** l'accumulateur d'énergie (DLC) est un condensateur à double couche.

3. Dispositif selon la revendication 1, **caractérisé en ce que** l'accumulateur d'énergie (DLC) est constitué d'un circuit en série d'accumulateurs.

4. Dispositif selon la revendication 1, **caractérisé en ce que** le convertisseur CC/CC (1) peut être connecté via un second commutateur (S2) à une autre source d'énergie (B).

5. Dispositif selon la revendication 1, **caractérisé en ce que** le convertisseur CC/CC (1) est un convertisseur abaisseur de tension réglé par courant.

6. Dispositif selon la revendication 1, **caractérisé en ce que** le circuit en pont du convertisseur CC/CA (2) est polyphasé, chaque phase étant constituée en demi-ponts à partir de deux transistors (T1-T2, T3-T4) montés en série, qui sont agencés en parallèle au condensateur de circuit intermédiaire (C_{z}).

7. Dispositif selon la revendication 6, **caractérisé en ce que** le circuit en pont du convertisseur CC/CA (2) est auto-synchronisé.

8. Dispositif selon la revendication 1, **caractérisé en ce qu'**un transformateur de liaison (Trₓ) avec un enroulement secondaire est affecté respectivement à deux éléments voisins (Zₓ, Zₓ₊₁) de l'accumulateur d'énergie (DLC), dans lequel le redresseur (3) agencé entre l'enroulement secondaire du transformateur de liaison (Trₓ) et les éléments (Zₓ, Zₓ₊₁) est tel
que la première borne de l'enroulement secondaire du transformateur de liaison affecté (Trₓ) est connectée, via une diode (Dₓ) conduisant du courant vers l'élément (Zₓ), à la borne positive du premier élément (Zₓ) et, via une diode (Dₓ₊₁) éloignant le courant de l'élément, à laborne négative de l'autre élément (Zₓ₊₁), et
que la seconde borne de l'enroulement secondaire est connectée directement au point de liaison des deux éléments (Zₓ, Zₓ₊₁).

9. Dispositif selon la revendication 1, **caractérisé en ce que** un transformateur de liaison (Trₓ) avec deux enroulements secondaires et une prise médiane est affecté respectivement à deux éléments voisins (Zₓ, Zₓ₊₁) de l'accumulateur d'énergie (DLC), dans lequel le redresseur (3) agencé entre les enroulements secondaires du transformateur de liaison (Trₓ) et les éléments (Zₓ, Zₓ₊₁) est tel que la première borne du premier enroulement secondaire du transformateur de liaison affecté (Trₓ) est connectée, via une diode (Dₓₐ) conduisant le courant vers l'élément, à la borne positive du premier élément (Zₓ) et, via une diode (D_{xb}) éloignant le courant de l'élément, à la borne négative du second élément (Zₓ₊₁),
la seconde borne du second enroulement secondaire du transformateur de liaison affecté (Trₓ) est connectée, via une diode (D_{xc}) conduisant le courant vers l'élément, à la borne positive du premier élément (Zₓ) et, via une diode (D_{xd}) éloignant le courant de l'élément, à la borne négative du second élément (Zₓ₊₁), et
la prise médiane des deux enroulements secondaires est connectée directement au point de liaison des deux éléments (Zₓ, Zₓ₊₁).

10. Procédé pour faire fonctionner le dispositif selon la revendication 1,
**caractérisé en ce que**
le convertisseur CC/CC (1) alimenté par l'accumulateur d'énergie (DLC) ou l'autre source d'énergie (B) achemine un courant au condensateur de circuit intermédiaire (C_{z}), moyennant quoi une tension (U_{CZ}) s'établit sur celui-ci pour le chargement des éléments (Zₓ), et
le convertisseur CC/CA (2) ondule cette tension (U_{CZ}) et la transmet, via les lignes omnibus CA (4.1, 4.2), au côté secondaire des transformateurs de liaison (Trₓ), un transformateur de liaison (Trₓ) respectif avec un ou deux enroulements secondaires et respectivement un redresseur (3) étant agencé entre chaque paire d'éléments voisins (Zₓ, Zₓ₊₁, avec x = 1 à n) et les lignes omnibus CA (4.1, 4.2) et
cette tension alternative secondaire est transformée, au moyen des diodes (Dₓₐ à D_{xd}, Dₓ, Dₓ₊₁, avec x = 1 à n) du redresseur (3), en un courant de charge pulsé redressé pour l'élément (Zₓ) avec la tension d'élément (U_{Zx}) la plus faible, dès lors qu'elle atteint une valeur correspondant à la somme de la tension (U_{Zx}) de l'élément (Zₓ) ayant la tension d'élément la plus faible et d'une ou de deux tensions directes de diodes.

11. Procédé selon la revendication 10 pour faire fonctionner le dispositif selon la revendication 1 ou 8, dans lequel un transformateur de liaison (Trₓ) avec un enroulement secondaire est affecté respectivement à deux éléments voisins (Zₓ, Zₓ₊₁), **caractérisé en ce que**
la tension secondaire du transformateur de liaison (Trₓ) dans la première phase produit un flux de courant de la première borne du premier enroulement secondaire à travers la première diode (Dₓ), le premier élément (Zₓ) avec la tension d'élément (U_{Zx}) la plus faible, avant de retourner à la seconde borne de l'enroulement secondaire, et
ne produit aucun flux de courant dans la seconde phase.

12. Procédé selon la revendication 11, **caractérisé en ce qu'**en cas d'égalité entre les deux tensions d'élément (U_{Zx}, U_{Zx+1}), la tension secondaire du transformateur de liaison (Trₓ) produit dans la seconde phase un flux de courant de la seconde borne de l'enroulement secondaire à travers le second élément (Zₓ₊₁) avant de retourner via la deuxième diode Dₓ₊₁ à la première borne de l'enroulement secondaire.

13. Procédé selon la revendication 10 pour faire fonctionner le dispositif selon la revendication 1 ou 9, dans lequel un transformateur de liaison (Trₓ) avec deux enroulements secondaires et une prise médiane est affecté respectivement à deux éléments voisins (Zₓ, Zₓ₊₁),
**caractérisé en ce que**
la tension secondaire du transformateur de liaison (Trₓ) produit dans la première phase un flux de courant de la première borne du premier enroulement secondaire à travers la première diode (Dₓₐ), lepremier élément (Zₓ) avec la tension d'élément (U_{Zx}) la plus faible, avant de retourner à la prise médiane, et
dans la seconde phase, un flux de courant de la seconde borne du second enroulement secondaire à travers la troisième diode (D_{xc}), le premier élément (Zₓ), avant de retourner à la prise médiane.

14. Procédé selon la revendication 13, **caractérisé en ce que**, dans le cas d'une égalité des deux tensions d'élément (U_{Zx}, U_{Zx+1}), la tension secondaire du transformateur de liaison (Trₓ) produit dans la première phase également un flux de courant de la prise médiane à travers le second élément (Zₓ₊₁) et la deuxième diode (D_{xb}) avant de retourner à la seconde borne de l'enroulement secondaire, et
produit dans la seconde phase également un flux de courant de la prise médiane à travers le second élément (Zₓ₊₁) et la quatrième diode (D_{Xd}) avant de retourner à la première borne du premier enroulement secondaire.
